# EUROPEAN PATENT APPLICATION

(11) **EP 3 718 906 A1**
(43) Date of publication of application: **07.10.2020**
(21) Application number: 19166850.8
(22) Date of filing: 02.04.2019
(51) Int. Cl.: B64D 47/02, G09F 21/10, B64D 47/06

(54) **DYNAMIC ILLUMINATION SYSTEM FOR AIRBORNE VEHICLES**

(71) Applicant: Airbus Operations GmbH, 21129 Hamburg (DE); Airbus Operations S.L., 28906 Madrid (ES)
(72) Inventor: PLOKKER, Matthijs, 21129 Hamburg (DE); HORNSTRA, Luc Jan, 21129 Hamburg (DE); NIELSEN, Frank, 21129 Hamburg (DE); DE BROUWER, Gabrielle, 28906 Madrid (ES)
(74) Representative: Isarpatent

(57) **Abstract**

An illumination system (1) for illuminating outer aircraft components of an airborne vehicle (A), such as an aircraft, includes a light projection system (6) configured to project visual imagery (P) to an outer surface of the airborne vehicle (A), and a projection controller (7) having a light control processor (7a) configured to control the operation of the light projection system (6) on the basis of at least one of operational flight status of the airborne vehicle (A), geographical location of the airborne vehicle (A) and configuration data of movable surfaces of the airborne vehicle (A) or on ambient light measurement.

## Description

### FIELD OF THE INVENTION

The present invention pertains to a dynamic illumination system for airborne vehicles, airborne vehicles being equipped with such dynamic illumination systems and methods for dynamically illuminating outer aircraft components.

Although applicable for any kind of airborne vehicle, the present invention and the corresponding underlying problems will be explained in further detail in conjunction with an aircraft. Airborne vehicles within the meaning of this disclosure include all types of vehicles that may be propelled through the air by force and/or supported by aerodynamic forces.

### BACKGROUND OF THE INVENTION

Airborne vehicles commonly employ static pictures, logos or decals painted or attached to the outside of the vehicle hull. Sometimes, static white light is used to highlight some parts of the otherwise static visual appearance of the airborne vehicles. In any case, a static visual identity contributes only to a limited extent to the attention an airborne vehicle may be gathering. Specifically, for purposes of branding or advertisement revenues improved and aesthetically more attractive solutions need to be found since permanent paint or foil attachments are difficult and expensive to change in a short amount of time.

Some approaches in the prior art are based on projecting visual imagery onto moving surfaces by means of light projection systems on the ground. However, such systems rarely take the position and shape of the moving surfaces to be illuminated into account. Other approaches involve projection systems as part of airborne vehicles.

Documents DE 20 2016 105 862 U1 discloses a projection system for forming an image on an outer wall of an aircraft and an aircraft with such a projection system. Document FR 3 002 360 A1 discloses a method and a device for displaying with the aid of at least one laser source a dynamic image on a movable vehicle. Document EP 2 549 329 B1 discloses a projector system for displaying information in a dynamic manner on an aircraft.

However, there is a need for improved and more flexible solutions for correct and undistorted shape and positioning of projected imagery onto the surfaces to be illuminated.

### SUMMARY OF THE INVENTION

It is one of the objects of the invention to improve an airborne light projection system for airborne vehicles in order to position the projected imagery more flexibly on outside components of the airborne vehicle.

According to a first aspect of the invention, an illumination system for an airborne vehicle includes a light projection system configured to project visual imagery to an outer surface of the airborne vehicle, and a projection controller having a light control processor configured to control the operation of the light projection system on the basis of at least one of operational flight status of the airborne vehicle, geographical location of the airborne vehicle and configuration data of movable surfaces of the airborne vehicle.

According to a second aspect of the invention, a method for illuminating outer aircraft components comprises the steps of projecting visual imagery to outer aircraft components of the aircraft using a light projection system of an illumination system of the aircraft, sending, from an illumination system control gateway of an avionics network of the aircraft, information items to a projection controller of the illumination system, the information items pertaining to at least one of operational flight status of the aircraft, geographical location of the aircraft and configuration data of movable surfaces of the aircraft, and varying or adapting, by a light control processor of the projection controller, the projected visual imagery on the basis of the information items pertaining to at least one of operational flight status of the aircraft, geographical location of the aircraft and configuration data of movable surfaces of the aircraft.

According to a third aspect of the invention, an airborne vehicle comprises an illumination system according to the first aspect of the invention. The airborne vehicle may be an aircraft and comprises at least one outer aircraft component to be illuminated. The light projection system of the illumination system is configured to project visual imagery to one or more of the at least one outer aircraft component. The airborne vehicle further comprises an avionics network having an illumination system control gateway coupled to an avionics network interface of the illumination system, the illumination system control gateway being configured to send information items to the projection controller of the illumination system on the basis of which the projected visual imagery to the one or more of the at least one outer aircraft component is varied, changed or adapted.

One idea of the present invention is to provide an illumination system with the capabilities to dynamically react to the operational state and geographical location of an airborne vehicle, time of day, month or year, weather conditions and other external factors.

The illumination systems, airborne vehicles and methods of the invention permit commercial application of external lighting on the aircraft by the airline. Such commercial application enhances the branding, cross-branding or advertising opportunities by individualizing the visual appearance of an aircraft and by attracting more attention due to richer illumination scenarios. Advantageously, the illumination or projected imagery may be updated remotely and on the basis of the demands of an airline or owner of an aircraft. The content of the illumination or projected imagery may benefit from utmost flexibility. For example, it may be possible for the projected imagery to include projection of media content like advertisement and scenes, projection of short video sequences, projection of photographs, projection of still images, projection of graphical illustrations or ornamental symbols.

In other use cases, the illumination systems, airborne vehicles and methods of the invention may also permit more practical applications such as sharing messages between aircraft flying in formation. For example, military aircraft flying under radar silent mode may use light signalling codes during refuelling operations to avoid or hamper enemy detection. Sharing information by means of illuminated outer surfaces may allow for much higher complexity in the information exchanged and therefore possibly enhance efficiency of operation. In some cases, the illumination systems may act as a sender of light encoded information for other illumination systems having a light receiver interface to capture this information. According to some embodiments of the illumination system, the illumination system may further comprise an avionics network interface which can be coupled to an illumination system control gateway of an avionics network of the airborne vehicle. In some embodiments thereof, the avionics network interface may a unidirectional data interface.

According to further embodiments of the illumination system, the light projection system may include a light source and an optical projection assembly. In some embodiments thereof, the light control processor may be used to control operational parameters of the light source and the optical projection assembly using corresponding control signals.

According to further embodiments of the illumination system, the light source may include at least one of halogen lamps, LEDs, OLEDs, and lasers. According to further embodiments of the illumination system, the light source may be configured to emit regular coloured light on a single wavelength, multiple wavelengths or over one or more bands of emission wavelengths.

According to further embodiments of the illumination system, the light control processor may be configured to calculate and correct for movement of movable surfaces based on flight operational data provided to the light control processor from an avionics network of the airborne vehicle.

According to further embodiments of the illumination system, the projection controller may include a memory device configured to store configuration data and/or pre-loaded images, movies or pictures to be displayed via the light projection system. In some embodiments thereof, the projection controller may include an external interface over which the projection controller is connectable to an external configuration device.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an aircraft having a dynamical illumination system according to some embodiments of the invention.
Fig. 2 schematically illustrates a functional block diagram of a dynamical illumination system in conjunction with components of an avionics network on board of an aircraft according to other embodiments of the invention.
Fig. 3 schematically illustrates a flow diagram of a method for illuminating outer aircraft components according to yet another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

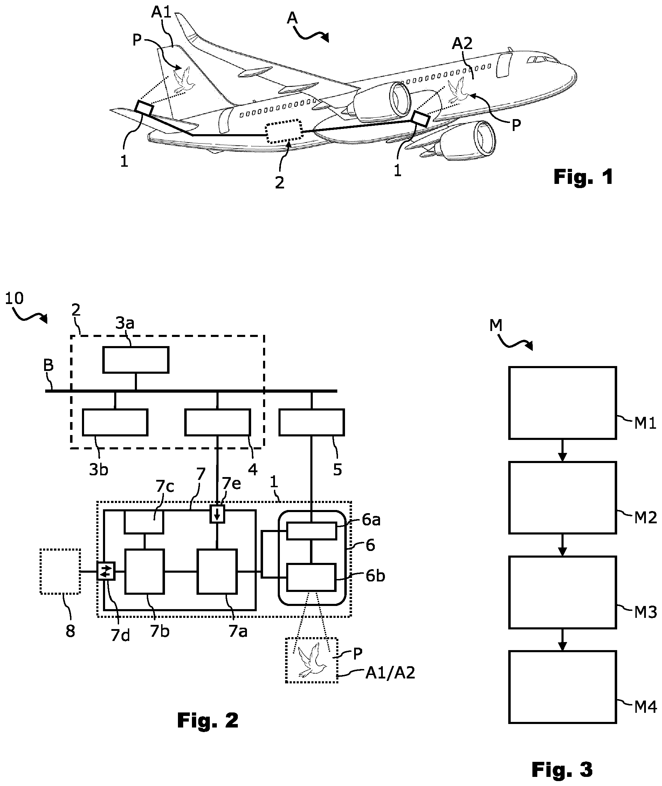

Fig. 1 shows a schematic illustration of an aircraft A having a dynamical illumination system 1 with illumination projectors and an avionics network 2 as part of an illumination system for the aircraft A. A functional block diagram explaining parts and elements of the illumination system architecture 10 - as for example used in a vehicle such as the airborne vehicle exemplarily depicted with the reference numeral A in Fig. 1 - is illustrated in Fig. 2. Airborne vehicles within the meaning of this disclosure include all types of vehicles that may be propelled through the air by force and/or supported by aerodynamic forces. Specifically, the illumination systems disclosed herein may also work on airborne vehicles temporarily located on the ground or near the ground. Finally, a flow diagram of a method M for illuminating outer aircraft components, such as outer aircraft components A1 or A2 of the airborne vehicle exemplarily depicted with the reference numeral A in Fig. 1 is exemplarily illustrated in Fig. 3. The method M may in particular employ an illumination system 1 and/or an illumination system architecture 10 as shown and explained in conjunction with Fig. 2.

The illumination system architecture 10 generally includes an avionics network 2 on board of an airborne vehicle, such as the aircraft A. The avionics network 2 may have a backbone B which is used to communicate between different network participants such as an aircraft flight control system 3a and cockpit systems 3b. The avionics network 2 includes an illumination system control gateway 4 that may be used to convey various information from the avionics network 2 and its network components to the illumination system 1. The illumination system control gateway 4 may particularly send information items from the avionics network 2 to the projection controller 7 on the basis of which external illumination of the aircraft A may be varied, changed or adapted.

The illumination system 10 generally includes a light projection system 6 and a projection controller 7 connected to the light projection system 6. The light projection system 6 may include a light source 6a, such as halogen lamps, LEDs or lasers which may in each case emit regular coloured light on a single wavelength, multiple wavelengths or over one or more bands of emission wavelengths. The light emitted by the light source 6a may pass an optical projection assembly 6b having various lenses, mirrors and other optical equipment to form imagery P to be projected by the light projection system 6.

The projection controller 7 is used to control the content, brightness, fidelity, colouring and other parameters of the imagery P to be projected by the light projection system 6. To that end, the projection controller 7 includes a light control processor 7a operatively connected to either one or both of the light source 6a and the optical projection assembly 6b. The light control processor 7a may be used to control operational parameters of the light source 6a and the optical projection assembly 6b using corresponding control signals. The light control processor 7a may for example be a graphics processing unit (GPU). The light control processor 7a may use information items received from the avionics network 2 to modify positioning and/or shape of the projected content on the aircraft outer surfaces. In particular, the light control processor 7a may control the projected images to be spatially correctly positioned and visually neutral, i.e. neither distorted nor biased.

The projection controller 7 further includes a memory device 7b that is used to store configuration data and/or pre-loaded images, movies or pictures to be displayed via the light projection system 6. The memory device 7b may on one hand be provided with data to be stored via an external interface 7d over which the projection controller 7 may be updated or reconfigured remotely at any moment in time using a digital network connection to an external configuration device 8, such as a computer on a digital network (airline IT network, telecommunications network, satellite network, WiFi network, wireless local area network) or an electronic device (smartphone, tablet) connected to the external interface 7d. The external interface 7d may be a wired or wireless interface and may work bidirectionally.

In some configurations, the external interface 7d may be an optical interface specifically designed to capture optical input signal, such as for example projected imagery of illumination systems of other airborne vehicles. In such a configuration, two illumination systems of different airborne vehicles may act as senders and receivers of light communication (LiFi) between the two airborne vehicles.

On the other hand, the memory device 7b may be manually updated by using a physical connection to a removable memory card slot 7c in which a mobile storage device, such as an SD card may be inserted. Configuration data from the mobile storage device may then be transferred into the memory device 7b. The memory device 7b may store specifically prepared projection content which may have been prepared using a specific image mapping computer program adapted to take into account the surfaces onto which the imagery P is to be projected.

In some configurations, the projection content to be displayed may be derived from other aircraft data systems such as for example an in-flight entertainment system.

Illumination includes, but is not limited to, all types of illuminations or image projections on external surfaces of an aircraft A. For example, it may be possible for the projected imagery to include projection of media content like advertisement and scenes, projection of short video sequences, projection of photographs, projection of still images, projection of graphical illustrations or ornamental symbols. The external surfaces of the aircraft can be located anywhere on the aircraft, and can be built from only one or from several different surfaces, either forming one combined surface together or being split in several different surfaces. For illumination of different surfaces, multiple illumination lights or projectors may be needed. For example, the tailfin A1 of an aircraft may be illuminated. In other variations, the hull A2 of the passenger cabin may be target of a light projection system 6.

Of course, other external surfaces, including moving or movable surfaces, may be target of one or more light projection systems 6 as well. In case of illumination of aircraft movable surfaces or parts thereof, a correction of the illumination direction would be possible. The light control processor 7a may calculate and correct for movement of the moving or movable surface based on flight operational data provided to the light control processor 7a from the illumination system control gateway 4 of the avionics network 2. Data for calculations of illumination corrections may be derived from movable calibration at airframe assembly. In some configurations it may be possible to include an illumination sensor (not explicitly depicted in the drawings) in the illumination system 1 in order to detect movement or positioning of the moving or movable surfaces by the light controller 7 itself. Such measurements of an illumination sensor, for example an infrared sensor or a LIDAR sensor, may be included in the illumination corrections performed by the light control processor 7a. Such sensor may also allow automatically turning the system on or off or dimming it accordingly to ambient light level.

Through the avionics network interface 7e, the avionics network 2 may periodically or constantly provide data items relating to operational flight status, geographical location of the aircraft or configuration data of aircraft movable surfaces to the light controller 7. The operational flight status may include parameters pertaining to the mode of operation of the aircraft, such as for example - but not limited to - the current flight altitude, the current airspeed, the current roll/pitch/yaw angles, the current flight or movement phase (ascent, descent, taxiing, cruise flight), the communication mode (e.g. radio silent mode) and other parameters. The geographical location may be derived from positioning or location systems within the aircraft.

The avionics network interface 7e may be a unidirectional interface, i.e. data may be transferred from the avionics network 2 to the light controller 7, but not the other way round. This provides additional security for the avionics network 2 from possible tampering with the illumination system 1. Generally, all content uploaded to the illumination system 1 may be carried out through secure network connections and the content may be checked and screened for malicious or faulty data items.

The light projection systems 6 may be powered using a power source 5 on board of the airborne vehicle, such as an electrical energy source. It may also be possible to provide Power over Ethernet (PoE), or Powerline Communication (PLC), to the light projection systems 6 along with the control signals from the light controller 7.

The method M for illuminating outer aircraft components (for example tailfins A1 or hull parts A2 of the aircraft) may include in a first stage M1 projecting visual imagery P to outer aircraft components A1; A2 of the aircraft A using a light projection system 6 of an illumination system 1 of the aircraft A. The light projection system 6 may for example include a light source 6a and an optical projection assembly 6b, with the light control processor 7a controlling operational parameters of the light source 6a and the optical projection assembly 6b using corresponding control signals.

Then, in a second stage M2 an illumination system control gateway 4 of an avionics network 2 of the aircraft A may send information items to a projection controller 7 of the illumination system 1. Those information items pertain to at least one of operational flight status of the aircraft A, geographical location of the aircraft A and configuration data of movable surfaces of the aircraft A.

In a third stage M3, a light control processor 7a of the projection controller 7 is be used to varying or adapt the projected visual imagery P on the basis of the information items pertaining to at least one of operational flight status of the aircraft A, geographical location of the aircraft A and configuration data of movable surfaces of the aircraft A. The information items may in some cases also include control signals sent out by the crew or passengers to change the projected content fully or partially.

Optionally, a fourth stage M4 may include calculating and correcting measures to be taken by the light control processor 7a, the calculating and correcting measures taking into account flight operational data from an avionics network 2 of the aircraft A. The correction measures aim to correct the light projection of the light projection system to account for movement of movable surfaces of the outer aircraft components A1; A2, such as for example horizontal or vertical trim operations of a tailfin A1.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. In particular, the embodiments and configurations described for the systems and aircraft infrastructure can be applied accordingly to the aircraft or spacecraft according to the invention and the method according to the invention, and vice versa.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

## Claims

1. Illumination system (1) for an airborne vehicle (A), the illumination system (1) comprising:
a light projection system (6) configured to project visual imagery (P) to an outer surface of the airborne vehicle (A); and
a projection controller (7) having a light control processor (7a) configured to control the operation of the light projection system (6) on the basis of at least one of operational flight status of the airborne vehicle (A), geographical location of the airborne vehicle (A) and configuration data of movable surfaces of the airborne vehicle (A).

2. Illumination system (1) according to claim 1, further comprising:
an avionics network interface (7e) which can be coupled to an illumination system control gateway (4) of an avionics network (2) of the airborne vehicle (A).

3. Illumination system (1) according to claim 2, wherein the avionics network interface (7e) is a unidirectional data interface.

4. Illumination system (1) according to one of the claims 1 to 3, wherein the light projection system (6) includes a light source (6a) and an optical projection assembly (6b), the light control processor (7a) being used to control operational parameters of the light source (6a) and the optical projection assembly (6b) using corresponding control signals.

5. Illumination system (1) according to claim 4, wherein the light source (6a) includes at least one of halogen lamps, LEDs, OLED and lasers, the light source (6a) being configured to emit regular coloured light on a single wavelength, multiple wavelengths or over one or more bands of emission wavelengths.

6. Illumination system (1) according to one of the claims 1 to 5, wherein the light control processor (7a) is configured to calculate and correct for movement of movable surfaces based on flight operational data provided to the light control processor (7a) from an avionics network (2) of the airborne vehicle (A).

7. Illumination system (1) according to one of the claims 1 to 6, wherein the projection controller (7) includes a memory device (7b) configured to store configuration data and/or pre-loaded images, movies or pictures to be displayed via the light projection system (6).

8. Illumination system (1) according to claim 7, wherein the projection controller (7) includes an external interface (7d) over which the projection controller (7) is connectable to an external configuration device (8).

9. Aircraft (A), comprising:
at least one outer aircraft component (A1; A2) to be illuminated;
an illumination system (1) according to one of the claims 1 to 8, the light projection system (6) of the illumination system (1) being configured to project visual imagery (P) to one or more of the at least one outer aircraft component (A1; A2); and
an avionics network (2) having an illumination system control gateway (4) coupled to an avionics network interface (7e) of the illumination system (1), the illumination system control gateway (4) being configured to send information items to the projection controller (7) of the illumination system (1) on the basis of which the projected visual imagery (P) to the one or more of the at least one outer aircraft component (A1; A2) is varied, changed or adapted.

10. Method (M) for illuminating outer aircraft components (A1; A2) of an aircraft (A), the method (M) comprising:
projecting (M1) visual imagery (P) to outer aircraft components (A1; A2) of the aircraft (A) using a light projection system (6) of an illumination system (1) of the aircraft (A);
sending (M2), from an illumination system control gateway (4) of an avionics network (2) of the aircraft (A), information items to a projection controller (7) of the illumination system (1), the information items pertaining to at least one of operational flight status of the aircraft (A), geographical location of the aircraft (A) and configuration data of movable surfaces of the aircraft (A);
varying or adapting (M3), by a light control processor (7a) of the projection controller (7), the projected visual imagery (P) on the basis of the information items pertaining to at least one of operational flight status of the aircraft (A), geographical location of the aircraft (A) and configuration data of movable surfaces of the aircraft (A).

11. Method (M) according to claim 10, wherein the light projection system (6) includes a light source (6a) and an optical projection assembly (6b), the light control processor (7a) controlling operational parameters of the light source (6a) and the optical projection assembly (6b) using corresponding control signals.

12. Method (M) according to claim 10 or 11, further comprising:
calculating and correcting (M4), by the light control processor (7a), for movement of movable surfaces of the outer aircraft components (A1; A2) based on flight operational data from an avionics network (2) of the aircraft (A) and/or on ambient light measurement.
